# EUROPÄISCHE PATENTSCHRIFT

(11) **EP 2 397 731 B1**
(45) Veröffentlichungstag und Bekanntmachung des Hinweises auf die Patenterteilung: **29.06.2016**
(21) Anmeldenummer: 11162820.2
(22) Anmeldetag: 18.04.2011
(51) Int. Cl.: F16K 1/44, F16K 1/46

(54) **Doppelsitzventil und Abdichtung eines Doppelsitzventils**
Double seat valve and seal for same
Soupape à double siège et joint d'une soupape à double siège

(30) Priorität: 21.06.2010 DE 102010030300
(43) Veröffentlichungstag der Anmeldung: 21.12.2011
(73) Patentinhaber: Krones AG, 93073 Neutraubling (DE)
(72) Erfinder: Sauer, Martin, 86687 Altisheim (DE)
(74) Vertreter: Grünecker Patent- und Rechtsanwälte PartG mbB

(56) Entgegenhaltungen:
- EP-A1- 0 208 126
- EP-A1- 1 730 430
- DE-C1- 10 147 455
- DE-U1- 20 205 467
- JP-U- S57 127 956

## Beschreibung

Die Erfindung betrifft ein Doppelsitzventil der im Oberbegriff des Patentanspruchs 1 angegebenen Art sowie eine Abdichtung der im Oberbegriff des Patentanspruchs 16 angegebenen Art.

Bei dem aus EP 1 730 430 A bekannten Doppelsitzventil weisen die beiden Ventilteller Ringnuten mit unterschiedlichen Querschnitten und unterschiedliche Ringdichtungen in den Ringnuten auf. Im eine Sitzventilfunktion erbringenden, einteiligen Ventilteller ist ein im Querschnitt trapezförmiger einstückiger Dichtring so eingeknüpft, dass seine Außendichtzone in etwa axial und in Richtung zum anderen Ventilteller orientiert ist. In der Ringnut des eine Schieberventilfunktion erbringenden Ventiltellers ist eine Verbund-Ringdichtung angeordnet, die aus einem elastischen Dichtring mit im Wesentlichen C-förmigem Querschnitt und einem damit durch Vulkanisation stoffschlüssig verbundenen metallischen Stützring mit annähernd T-förmigem Querschnitt besteht. Die beiden Dichtringe sind zumindest form- und dimensionsverschieden. Am Hochsteg des T-Querschnitts des Stützrings stützen sich miteinander verschraubte Teile des Ventiltellers axial ab. Der Dichtring für die Schieberventilfunktion weist eine im Wesentlichen radial orientierte Außendichtzone und eine daran angrenzende im Wesentlichen axial orientierte weitere Mitteldichtzone auf. Aufgrund der beiden Dichtzonen ist der Vorspannkraftschluss des Dichtrings in der Ringnut so definiert, so dass bei der dynamischen Dichtfunktion ein Hinterwandern des Dichtrings in der Ringnut nicht zuverlässig ausschließbar ist. Außerdem ist die VerbundRingdichtung aufwändig herzustellen und teuer, und muss bei Austauschen des Dichtrings auch der Stützring gewechselt werden. Die Bereitstellung zweier unterschiedlicher Ringdichtungen für das Doppelsitzventil bedeutet logistischen Mehraufwand. Die Montage des Dichtrings für die Sitzventilfunktion ist schwierig, bedingt eine extreme Verformung, und birgt die Gefahr der Produkthinterwanderung und des Herausreißens der Dichtung. Da in der Schließstellung des für die Sitzventilfunktion verantwortlichen Ventiltellers unter extremen Prozessbedingungen kein eindeutiger metallischer Anschlag des Ventiltellers vorliegt, entstehen für den Dichtring extreme und variierende Belastungen. Die Dichtringe sind bei nachlassender Dichtwirkung zu tauschende Verschleißteile.

Bei einem aus DE 101 47 455 C bekannten Doppelsitzventil einer anderen Art, nämlich mit zwei gleichdurchmessrigen, jeweils nur eine Schieberventilfunktion erbringenden Ventiltellern sind in den beiden Ventiltellern gleiche Ringdichtungen jeweils für eine ausschließlich radiale Dichtwirkung montiert. Die beiden Ventilteller sind zumindest zweiteilig. Die verschrauben Teile begrenzen miteinander die Ringnut für die Ringdichtung. Jede Ringdichtung besteht aus drei Komponenten, nämlich einem formstabilen Stützring mit C-förmigem Querschnitt, einem im Stützring positionierten Rückstellring aus elastischem Material, beispielsweise einem O-Ring, und dem aus elastischem Material bestehenden Dichtring, der C-förmigen Querschnitt besitzt und austauschbar auf den Stützring aufgebracht ist. Da der Stützring nur radial an wenigstens einem Teil des Ventiltellers abgestützt ist, hingegen die Teile des Ventiltellers gegeneinander auf Anschlag gespannt sind, wird die für den Vorspannformschluss des Dichtrings in der Ringnut verantwortliche Klemmweite der Ringnut unzweckmäßig von unvermeidbaren Herstellungstoleranzen der Teile des Ventiltellers beeinflusst, so dass innerhalb einer Bauserie von Ventiltellern unterschiedliche Vorspannkraftschlüsse der Dichtringe nicht ausgeschlossen werden können. Zur leichteren Montage kann der Stützring aus Segmenten zusammengesetzt sein. Zwischen dem Dichtring und dem Rückstellring sowie dem Stützring treten bei dynamischer Dichtfunktion des Dichtrings im Sitz unvermeidbare Relativbewegungen mit lokal konzentrierter Reibung und Spannung auf, die die Lebensdauer des Dichtrings und die Dichtfunktion gefährden.

Der Erfindung liegt die Aufgabe zugrunde, ein Doppelsitzventil der eingangs genannten Art zu schaffen, das kostengünstig herstellbar, einfach montierbar und funktionssicher ist, sowie eine universelle Abdichtung eines Doppelsitzventils anzugeben.

Die gestellte Aufgabe wird mit den Merkmalen im Patentanspruch 1 und im Patentanspruch 16 gelöst.

Da die Dichtringe form- und dimensionsgleich hergestellt sind, kann jeder Dichtring in jedem Ventilteller montiert werden, so dass keine Verwechslungsgefahr gegeben ist. Die Dichtringe für das jeweilige Doppelsitzventil oder eine Bauserie von Doppelsitzventilen können in derselben Produktionsform hergestellt werden, was unter anderem wegen größerer Stückzahlen kostengünstig ist und Logistikprobleme minimiert. Jeder der untereinander gleichen Dichtringe ist mit dem der jeweiligen Dichtfunktion entsprechend ausgebildeten Stützring so in der Ringnut positioniert, dass im Doppelsitzventil eindeutig definierte dynamische und statische Dichtfunktionen gewährleistet werden. Im Doppelsitzventil sind die beiden Dichtringe mit sich im Hinblick auf die jeweilige Dichtfunktion unterschiedlichen Drehlagen relativ zur Verstellrichtung der Ventilteller angeordnet. Aufgrund nicht verwechselbar einzusetzender Stützring und für die unterschiedlichen Stützringe gestalteter Ringnuten ergibt sich jeweils die korrekte Einbaulage der Ringdichtung, ohne auch beim Austausch dieser Verschleißteile spezielles Augenmerk auf die richtige Auswahl eines Dichtrings richten zu müssen.

Trotz unterschiedlicher Dichtfunktionen der beiden Ventilteller kommt die erfindungsgemäße Abdichtung des Doppelsitzventils mit einem Dichtringtyp aus, der auch seines universell erweiterten Einsatzbereiches Kosten, logistische Probleme und beim Austausch sowie bei Erstmontage eine Verwechslungsgefahr reduzieren lässt, und mit den unterschiedlichen Stützringen jede der beiden Dichtfunktionen eindeutig definiert erfüllt.

Erfindungsgemäß werden im Doppelsitzventil die beiden Dichtringe, zusätzlich zu den unterschiedlichen Drehlagen in den beiden Ventiltellern, mit Stützringen unterschiedlicher Wirkdurchmesser kombiniert, die entsprechend an die jeweilige Dichtfunktion (im Wesentlichen axiale Dichtfunktion eines Sitzventils, auf größerem Durchmesser, im Wesentlichen radiale Dichtfunktion eines Schieberventils auf kleinerem Durchmesser) angepasst und verschieden sind, wie auch die gegebenenfalls untereinander gleichen, Querschnitte aufweisenden, aber unterschiedlich orientierten Ringnuten in den beiden Ventiltellern. Die Elastizität der form- und dimensionsgleichen Dichtringe ermöglicht es problemlos, jeden Dichtring mit jedem Stützring zu kombinieren.

Erfindungsgemäß weist ferner jeder Dichtring zumindest eine aus der Ringnut vortretende Auβendichtzone auf, ist der Dichtring für die radiale Dichtfunktion im einen, mehrteiligen Ventilteller in einer Drehlage mit etwa radial und nach außen orientierter Außendichtzone angeordnet, und ist der Dichtring für die zumindest im Wesentlichen axiale Dichtfunktion im anderen, ebenfalls mehrteilig ausgebildeten Ventilteller in einer Drehlage angeordnet, in der die Außendichtzone axial und radial mit einem Winkel kleiner 90° schräg zur Verstellrichtung und zum einen Ventilteller hin orientiert ist. Der Winkel liegt vorzugsweise bei etwa 30°.

Bei einer bevorzugten Ausführungsform weist jeder Stützring einen Fußteil zur Fixierung zwischen Teilen des Ventiltellers sowie einen zumindest formschlüssig innen in den Dichtring einbringbaren Stützteil auf. Die Fußteile beider Stützringe können form- und/oder dimensionsverschieden sein, zum Beispiel angepasst an die jeweiligen Montagevoraussetzungen im Ventilteller. Hingegen können die zur Zusammenwirkung mit dem Dichtring bestimmten Stützteile der Stützringe, vorzugsweise, mit untereinander gleichen Querschnitten ausgebildet sein.

Erfindungsgemäß erstreckt sich der Stützteil des einen Stützrings senkrecht vom Fußteil weg, während sich der Stützteil des anderen Stützring-Typs schräg unter einem Winkel vom Fußteil weg erstreckt. Die Stützringe sind einfach und kostengünstig herstellbare Teile, beispielsweise aus Metall oder einem härteren Werkstoff als der des Dichtrings.

Im Hinblick darauf, dass in beiden Ventiltellern der gleiche Dichtringtyp verwendet wird, ist es zweckmäßig, wenn die Ringnuten in beiden Ventiltellern zumindest im Wesentlichen identische Querschnitte aufweisen. Auf diese Weise stehen, unter der Voraussetzung untereinander gleicher Stützteile der Stützringe, die beiden Dichtringe in beiden Ringnuten unter gleichen Vorspannkraftschlüssen, wie dies für eindeutig definierte statische, und gegebenenfalls dynamische Dichtfunktionen wichtig ist.

Der Vorzug wird Dichtringen gegeben, die nicht nur form- und dimensionsgleich sondern auch in ihren Elastizitäten gleichartig sind.

Im Hinblick darauf, dass ein aufgebrachter Dichtring in Umfangsrichtung auf dem Stützring gegebenenfalls mehr gedehnt wird als der andere, könnten die form- und dimensionsgleich gegebenenfalls in derselben Form hergestellten Dichtringe gleiche oder ungleiche Elastizitäten, vorzugsweise gleiche oder ungleiche Shore-Härten, aufweisen, und/oder aus unterschiedlichen Elastomer- oder Gummi-Materialien bestehen, um das Aufbringen zu erleichtern.

Es könnte ferner der Dichtring in Spritzgieß-Mehrkomponententechnik einstückig mit Zonen unterschiedlicher Shore-Härten und/oder aus unterschiedlichen Materialien hergestellt sein. Die Zonen oder Materialien könnten beispielsweise auf eine dynamische Dichtfunktion im Sitz bzw. eine statische Dichtfunktion in der Ringnut des Ventiltellers abgestimmt sein.

Bei einer zweckmäßigen Ausführungsform der Erfindung weist jeder Dichtring in seinem im Wesentlichen C-förmigen Querschnitt zwei Außenschenkel auf, die gleiche Querschnitte besitzen können und, vorzugsweise, zu ihren freien Enden in der Stärke zunehmen. Zwischen den Außenschenkeln wird die zweckmäßig dachförmig gestaltete Außendichtzone gebildet. Innenseitig angrenzend an die Außenschenkel ist je eine Ringnut vorgesehen, während zwischen den Ringnuten wenigstens ein einwärts vortretender Ringwulst eingeformt ist. Die Außenschenkel sind im Wesentlichen für die statische Dichtfunktion des Dichtrings in der Ringnut verantwortlich, während die Außendichtzone im Zusammenspiel mit dem Ringwulst und dem Stützring für die dynamische Dichtfunktion verantwortlich ist. Der einstückig integrierte Ringwulst erfüllt die Funktion eines Rückstellbereiches und grenzt zweckmäßig direkt an die dynamisch aktive Außendichtzone an.

Um für eine einwandfreie Positionierung des Stützrings einen relativ großen Stützringfußteil zu haben, kann es zweckmäßig sein, wenn die Ringrippen des Stützteils des Stützrings über Außenschultern gegenüber dem Fußteil einwärts versetzt sind. Der Stützteil am Fußteil ist hingegen in seiner Größe auf den Dichtring abgestimmt, der in seinem Querschnitt relativ klein bemessen sein kann, d.h. aus relativ wenig elastischem Material besteht. Die Außenschultern ermöglichen es ferner, in der Ringnut Freiräume zu begrenzen, in denen die Außenschenkel des Dichtringes zum Beispiel temperatur- und/oder quellungsbedingt expandieren oder kontrahieren können. Das wenige Material bzw. der relativ kleine Querschnitt des Dichtringes bietet Vorteile hinsichtlich geringeren Quellvolumens bei Kontakt mit Medien und geringerer volumentrischer Ausdehnung bei Temperaturänderungen.

Um die mechanische Belastung beim Aufbringen des Dichtrings auf den Stützring zu minimieren und/oder die Montage zu vereinfachen, kann der Stützring aus Ringsegmenten teilbar ausgebildet sein. In montierter Lage wird der Stützring aus Ringsegmenten ohnedies durch die Klemmung zwischen den Teilen des Ventiltellers zu einem wirkungsmäßig einstückigen Stützring. Da die Dehnung des Dichtrings beim Aufbringen ohnedies moderat ist, können auch einteilige Stützringe verwendet werden.

Aufgrund des zwischen der von den Teilen des Ventiltellers begrenzten Ringnut und dem Stützring eindeutig definierten Vorspannkraftschlusses und wegen der einfachen Montage ohne exzessive Verformungen des Dichtrings, kann dieser eine Shore-Härte von etwa 85 Shore aufweisen. Dieser relativ hohe Härtegrad minimiert die Gefahr des Hinterwanderns des Dichtrings in der Ringnut und trägt zur Erhöhung der Standzeit des Dichtrings bei.

Zweckmäßig ist der Dichtring austauschbar auf dem Stützring angebracht, so dass der Stützring bei Tausch des Dichtrings weiter verwendet werden kann. Dies schließt jedoch nicht aus, alternativ den Dichtring stoffschlüssig mit dem Stützring zu verbinden und beide Komponenten gemeinsam zu tauschen.

Bei einer zweckmäßigen Ausführungsform weisen die Ventilteller an ihren zueinander weisenden Seiten formstabile, gegenseitig in Anlagekontakt bringbare Anschlagflächen auf. Alternativ oder additiv kann an einem Ventilteller ein umlaufender formstabiler Dichtwulst an einer zum anderen Ventilteller weisenden Seite vorgesehen sein, der mit der Außendichtzone des in schräger Drehlage angeordneten Dichtrings im anderen Ventilteller in einen zumindest im Wesentlichen axialen Mitteldichteingriff bringbar ist. Bei Kombination der Anschlagflächen und des Dichtwulstes definiert der Anlagekontakt exakt reproduzierbar das Ausmaß des Mitteldichteingriffs, so dass ein Eintritt oder Austritt von Medien in bzw. aus dem zwischen den beiden Ventiltellern somit hermetisch abgeschlossenen Leckageraum vermieden wird.

Ein besonders wichtiger Gedanke der Erfindung besteht darin, dass die die Ringnut definierenden Teile des Ventiltellers form- und kraftschlüssig im Wesentlichen in Verstellrichtung der Ventilteller von zwei Seiten am Stützring abgestützt sind, so dass der Stützring über diese Abstützung der Teile die einen Vorspannkraftschluss für den Dichtring in der Ringnut generierende Klemmweite der Ringnut definiert. Diese Funktion des Stützrings vermeidet es, dass sich unvermeidbare Herstellungstoleranzen der relativ großen Teile des Ventiltellers nachteilig auf die Präzision der Klemmweite der Ringnut auswirken.

Additiv oder alternativ kann es ferner zweckmäßig sein, wenn der Stützring die einen Überstand der Außendichtzone des Dichtrings über die Ringnut des Ventiltellers generierende Radialposition des Dichtringes definiert, z.B. über eine radiale formschlüssige Abstützung an wenigstens einem Teil des Ventiltellers. Die radiale Abstützung des Stützringes schließt es aus, dass der Stützring bei extremen Belastungen nachgeben und die Dichtfunktionen des Dichtringes gefährden kann.

Ein weiterer, wichtiger Gesichtspunkt der Erfindung besteht schließlich darin, dass die in die Ringnuten des Dichtringes eingreifenden Ringrippen am Stützteil des Stützringes statische Dichtbereiche des Dichtrings in der Ringnut funktionell von wenigstens einem dynamischen Dichtbereich des Dichtrings im Sitz des Ventilgehäuses separieren. Der statische Dichtbereich leistet in der Ringnut eine Dichtfunktion gegen Hinterwandern und Herausreißen, während der dynamische Dichtbereich die Dichtfunktion im Sitz zu leisten hat, bei der der Dichtring zumindest bereichsweise Verformungen unterliegt. Durch die Funktionstrennung über die Ringrippen des Stützteils können die eigentlich konträren Dichtfunktionen des Dichtrings einander nicht nachteilig beeinflussen.

Anhand der Zeichnung wird eine Ausführungsform des Erfindungsgegenstandes erläutert. Es zeigen:
- Fig. 1: einen Teilaxialschnitt eines Doppelsitzventils in Schließstellung unter Illustration einer Abdichtung des Doppelsitzventils, und
- Fig. 2: eine Schnittansicht zu Fig. 1 beispielsweise in einer Phase kurz vor Aufgabe der Schließstellung des Doppelsitzventils.

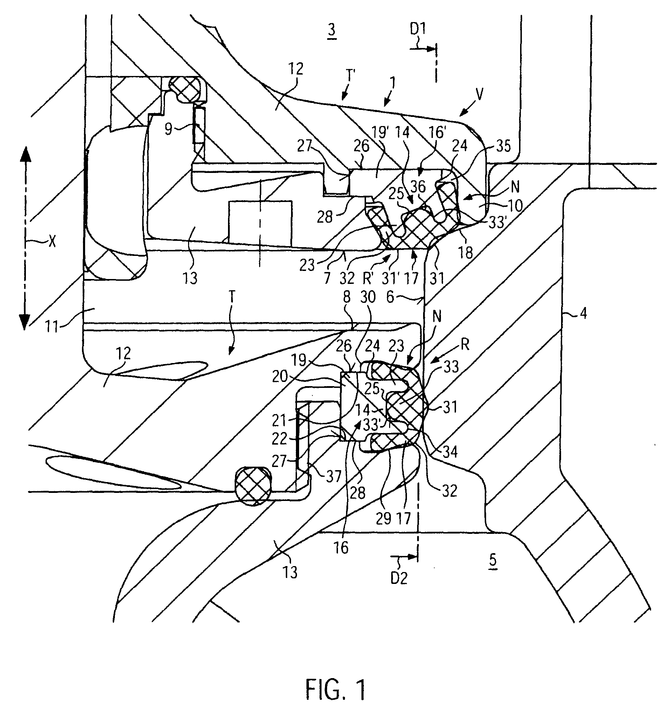

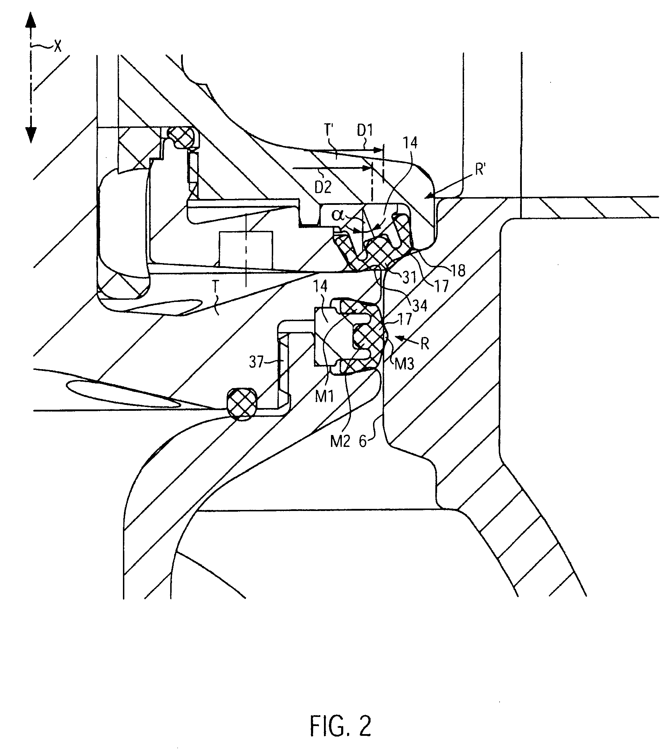

Doppelsitzventile V gemäß den Fig. 1 und 2 mit zwei gemeinsam mit einem Sitz 6 in einem Gehäuse 4 des Doppelsitzventils V zusammenarbeitenden Ventiltellern T, T' für eine Kombination aus einer Sitzventilfunktion 1 und einer Schieberventilfunktion 2 werden beispielsweise zur Strömungssteuerung für Getränke, Lebensmittel, pharmazeutische oder biotechnische Produkte verwendet. Solche Doppelsitzventile müssen gegebenenfalls in spezieller Weise extern und/oder intern reinigbar sein, in der Schließstellung (Fig. 1) Strömungswege 3, 5 zuverlässig voneinander isolieren und einen Leckageaustausch zwischen den Strömungsmedien vermeiden, und bei Reinigungstakten einen Medienaustausch zwischen den Strömungswegen 3, 5 ausschließen.

Fig. 1 ist ein Teil eines Axialschnittes des Doppelsitzventils V in Schließstellung. Der obere und der untere Ventilteller T', T besteht jeweils aus zwei Teilen 12, 13, die über Schraubverbindungen 9, 37 gegeneinander und jeweils gegen einen formstabilen Stützring 16, 16' einer Ringdichtung R, R' in einer Ringnut N gespannt sind. Der obere Ventilteller T' erbringt die Sitzventilfunktion 1 mit axialer und radialer Abdichtung an einer hier konischen Dichtfläche 18 im Sitz 6, während der untere Ventilteller T mit seiner Ringdichtung R die Schieberventilfunktion 2 mit nur radialer Abdichtung im Sitz 6 leistet. Der obere Ventilteller T' könnte hier zum Beispiel sogar eine rein axial wirkende Ringdichtung R' aufweisen (nicht gezeigt). Der Ventilteller T' kann aufgrund metallischer Anlage eines Randes 10 des Teils 12 an der Dichtfläche 18 in der Schließstellung eine genau definierte Dichtposition einnehmen.

Anhand Fig. 1 und 2 wird für ein solches Doppelsitzventil V bzw. dessen Abdichtung das Konzept der verwendeten Ringdichtungen R, R' erläutert. Es ist darauf hinzuweisen, dass die Ringdichtungen R, R' zwar unterschiedlich gestaltete Stützringe 16, 16' aufweisen, jedoch die daran angebrachten Dichtringe 17 form- und dimensionsgleich (ein gemeinsamer Dichtringtyp) hergestellt wurden, d.h. in derselben Herstellungsform produziert, jedoch in unterschiedlichen Drehlagen auf die Stützringe 16, 16' aufgebracht sind.

Der im unteren Ventilteller T verwendete Stützring 16 besitzt einen verbreiterten Fußteil 19, der durch orthogonal aneinander anschließende Flächen 20, 21, 22 an drei Seiten begrenzt wird, und so im Ventilteller T montiert ist, dass Anschlagflächen 26 und 28 der Teile 12, 13 des Ventiltellers T über die Schraubverbindung 37 von zwei einander gegenüberliegenden axialen Seiten, (das heißt in Verstellrichtung X) gegen die Flächen 20, 22 des Fußteils 19 gepresst werden. Auf diese Weise definiert der Stützring 16 über die Breite seines Fußteils 19 die Klemmweite zwischen Flanken 29 der Ringnut N, die einen vorbestimmten Vorspannkraftschluss für den Dichtring 17 generiert. Vorzugsweise, stützt sich der Stützring 16 ferner mit der Fläche 21 radial an einer zylindrischen Anschlagfläche 27 hier des Teils 13 ab, so dass der Stützring 16 auch die Radialposition des Dichtringes 17 definiert, die einen festgelegten Überstand einer außenseitigen Außendichtzone 31 des Dichtrings 17 über den Ventilteller T, (für die hier radiale Abdichtfunktion) erzeugt.

Vom Fußteil 19 erstrecken sich über Außenschultern 24 senkrecht und einwärts versetzt an einem Stützteil 14 des Stützrings 16 zwei zumindest im Wesentlichen zueinander parallele Ringrippen 23 weg, die zwischen sich eine Vertiefung 25 in Form einer gerundeten oder annähernd rechteckigen Ringnut einschließen. Der vom Stützring 16 im unteren Ventilteller T positionierte Dichtring 17 hat annähernd C-förmigen Querschnitt, besteht aus elastischem Material wie einem Elastomer oder Gummi, und besitzt zwei annähernd zueinander parallele Außenschenkel 32, die zwischen Innenflanken 29 der Ringnut N und auf den Ringrippen 23 des Stützteils 14 des Stützringes 16 mit dem vorbestimmten Vorspannkraftschluss festgelegt sind. Die Außenschenkel 32 sind hier z.B. keilförmig. Innen angrenzend an die Außenschenkel 32 sind Ringnuten 34 in den Dichtring 17 eingeformt, die zwischen sich wenigstens einen einwärts vortretenden Ringwulst 33' einschließen, der aus dem Material des Dichtringes 17 mit diesem einstückig ausgebildet ist und einen Rückstellbereich 33 definiert, der wirkungsmäßig zwischen der Vertiefung 25 und der Außendichtzone 31 eingeschaltet ist und dieser ein bestimmtes dynamisches Abdicht- bzw. Verformungsverhalten verleiht.

Der Stützring 16' im oberen Ventilteller T' in Fig. 1 und 2 unterscheidet sich von dem Stützring 16 im unteren Ventilteller T dadurch, dass der Fußteil 19' mit seinen orthogonal zueinander stehenden, aneinander anschließenden Flächen zwischen den Anschlagflächen 26, 28 der Teile 12, 13 axial, und, gegebenenfalls, an einer Anschlagfläche 27 auch radial fixiert ist, wobei sich der Fußteil 19' hier im Wesentlichen radial erstreckt. Der Stützteil 14 kann identischen Querschnitt haben wie der Stützteil 14 des anderen Stützringes 16. Die Ringrippen 23 streben hier im Stützteil 14 jedoch unter einem schrägen Winkel α vom Fußteil 19' weg. Die Ringnut N zwischen den beiden Teilen 12, 13 kann den gleichen Querschnitt haben wie die im unteren Ventilteller T, ist jedoch ebenfalls mit dem Winkel α schräg gestellt, um über den Dichtring 17 eine radiale und axiale Abdichtung an der konischen Dichtfläche 18 zu erzeugen. Die Klemmweite der Ringnut N wird auch im oberen Ventilteller T' durch den Stützring 16' und über die Abstützung der Teile 12, 13 am Fußteil 19' definiert, das heißt, es liegen auch hier ein definierter Vorspannkraftschluss des Dichtrings 17 in der Ringnut N sowie ein definierter Überstand der Außendichtzone 31 vor.

In der Ringdichtung R' (dies gilt auch für die Ringdichtung R im unteren Ventilteller T) im oberen Ventilteller T' sind angrenzend an den Ringwulst 33' Freiräume 36 definiert, und/oder Freiräume 35 zwischen dem Fußteil 19' bzw. 19 und den Teilen 12, 13 für die freien Enden der Außenschenkel 32. Diese Freiräume 36 und/oder 35 ermöglichen temperatur- und/oder quellungsbedingte Expansionen und Kontraktionen des Dichtrings 17.

Der untere Ventilteller T besitzt an seinem Teil 12 oben randseitig einen umlaufenden Dichtwulst 34, der zur Zusammenarbeit mit einer weiteren Außendichtzone 31' oder einem Teil der Außendichtzone 31 des Dichtrings 17 im oberen Ventilteller T' bestimmt ist, wenn das Doppelsitzventil V durch eine nicht gezeigte Antriebsvorrichtung aus der in Fig. 1 gezeigten Schließstellung in die Offenstellung gebracht wird, wobei (Fig. 2) vor dem Abheben des oberen Ventiltellers T' zunächst der untere Ventilteller T soweit angehoben wird, dass der Dichtwulst 34 am Dichtring 17 im oberen Ventilteller T' abdichtend angreift und beim nachfolgenden Abheben des oberen Ventiltellers T' von der konischen Dichtfläche 18 kein Medium aus einem Strömungsweg 3, 5 in den Zwischenraum (Leckageraum 11) zwischen den Ventiltellern T, T' einströmen oder daraus ausströmen kann. Zusätzlich können an den Ventiltellern T, T' Anschlagflächen 7, 8 in bestimmten Relativlagen zum Dichtwulst 34 und der Außendichtzone 31 oder 31' des Dichtrings 17 im oberen Ventilteller T' vorgesehen sein, die in der Ventilstellung von Fig. 2 in Anlagekontakt kommen und eine präzise, jeweils exakt reproduzierbare Dichtfunktion zwischen dem Dichtwulst 34 und der Außendichtzone 31 oder 31' definieren.

Aus der Mitnahmeposition in Fig. 2 wird der obere Ventilteller T' über den axialen Anlagekontakt der Anschlagflächen 7, 8 dann vom unteren Ventilteller T in die nicht gezeigte Öffnungsstellung des Doppelsitzventils V mitgenommen, in der beide Ventilteller T, T' aus dem Sitz 6 ausgetreten sind.

In Fig. 2 ist als eine mögliche Variante angedeutet, dass der jeweilige Dichtring 17 in Zonen M1, M2, M3 unterschiedliche Shore-Härten oder/und Elastizitäten oder/und Materialien hat, jedoch einstückig, zum Beispiel in Spritzgieß-Mehrkomponententechnik, produziert worden ist. Die Zonen M1, M2, M3 können auf unterschiedliche Dichtfunktionen (statische und/oder dynamische) abgestimmt sein. Grundsätzlich kann eine Shore-Härte von etwa 85 Shore für den Dichtring 17 gewählt werden, unabhängig davon, ob er im oberen Ventilteller T' oder im unteren Ventilteller T montiert wird, weil die Montage der Ringdichtung R, R' einfach ist und keine übermäßigen Verformungen des Dichtrings 17 erfordert. Diese relativ hohe Shore-Härte des Dichtrings 17 minimiert bei montierter Ringdichtung R, R' die Gefahr einer Hinterwanderung des Dichtrings in der Ringnut N und trägt zur Standfestigkeit, Ausreißfestigkeit und Verschleißfestigkeit des Dichtrings 17 bei.

Zweckmäßig werden erfindungsgemäß, wie erwähnt, form- und dimensionsgleiche Dichtringe 17, die in ein- und derselben Produktionsform herstellbar sind, wahlweise auf den Stützring 16' oder den Stützring 16 aufgebracht. Da der Unterschied zwischen den Wirkdurchmessern D1, D2 gering ist, können die Dichtringe 17 form- und dimensionsgleich und mit gleichen Shore-Härten für beide Stützringe 16, 16' verwendet werden. Im Hinblick darauf, dass der auf den Stützring 16' mit größerem Wirkdurchmesser D1 als dem Wirkdurchmesser D2 des Stützringes 16 aufgebrachte Dichtring 17 etwas mehr in Umfangsrichtung gedehnt und verdreht aufgebracht werden muss, kann gegebenenfalls der in ein- und derselben Form hergestellte Dichtring 17 für den Stützring 16' mit etwas niedrigerer Shore-Härte und damit höherer Elastizität ausgelegt sein. Zur Vereinfachung der Montage, und um starke Verformungen des Dichtrings 17 beim Aufbringen zu vermeiden, kann der Stützring 16, 16' aus mindestens zwei Segmenten bestehen, die von innen in den Dichtring 17 einzeln eingesetzt und darin gefügt werden. Alternativ ist der Stützring 16, 16' einteilig.

Der zumindest eine zwischen den Ringnuten 34 des Dichtrings 17 einwärts vorspringende Ringwulst 33' bildet einen Rückstellbereich 33 der Ringdichtung 17, der wirkungsmäßig und für eine dynamische Dichtfunktion der Außendichtzone 31 zwischen dem Grund der Vertiefung 25 und den Ringrippen 23 des Stützteils 14 des Stützrings 16, 16' und der Außendichtzone 31 eingeschaltet ist. Dieser einstückig integrierte Rückstellbereich 33 definiert zum Beispiel das dynamische Verformungs- und Dichtverhalten der Außendichtzone 31, die bei der gewählten Ausführungsform des Dichtrings 17 beispielsweise dachförmig gestaltet ist, jedoch auch eine andere Oberflächenstruktur haben könnte. Beim Verschieben des unteren Ventiltellers T im Sitz 6 sowie beim Ein- und Austauchen in den bzw. aus dem Sitz 6 erzeugt der Rückstellbereich 33 vorwiegend die radiale Anpressung der Außendichtzone 31 an die Innenwand des Sitzes 6, wobei er sich am Grund der Vertiefung 25 und zwischen den Ringrippen 23 am Stützring 16 abstützt, während die Ringrippen 23 in den Ringnuten 34 in Verstellrichtung X wirkende Kräfte aufnehmen. Von solchen Verformungen werden die Außenschenkel 32 freigehalten, die nur die statische Abdichtfunktion im Inneren der Ringnut N leisten. Dies gilt auch für die obere Ringdichtung R' in den Fig. 1 und 2, bei der der Stützring 16' für die Funktionstrennung der Dichtund Arbeitsfunktionen der Ringdichtung 17 sorgt, wenn die Außendichtzone 31 mit der konischen Dichtfläche 18 zusammenarbeitet, oder mit dem Dichtwulst 34 des unteren Ventiltellers T. Mittels des Stützringes 16 bzw. 16' und dessen Einspannung zwischen den Teilen 12, 13 des Ventiltellers T, T', gepaart mit der Integration des Rückstellbereiches 33 in die Ringdichtung 17 wird eine klar definierte Funktionstrennung der statischen und dynamischen Dichtfunktionen des Dichtringes 17 beim Arbeiten des Doppelsitzventils V erzielt. Die Kombination des Stützringes 16, 16' mit dem Dichtring 17 ermöglicht es schließlich vorteilhaft, im Querschnitt des Dichtringes 17 mit relativ wenig Material auszukommen, wodurch besonders der Vorteil zur Geltung kommt, dass die Quellung des Materials bei Kontakt mit Medien sowie dessen Ausdehnung bei höheren Temperaturen in Grenzen gehalten werden.

## Patentansprüche

1. Doppelsitzventil (V), insbesondere zur Strömungssteuerung von Getränken, Lebensmitteln, pharmazeutischen oder biotechnischen Produkten, mit wenigstens einem in einem Ventilgehäuse (4) zwischen Strömungswegen (3, 5) angeordneten Sitz (6) mit Dichtflächen zur Zusammenarbeit mit zwei relativ zueinander und relativ zum Sitz (6) linear in einer Verstellrichtung (X) verstellbaren Ventiltellern (T, T'), deren jeder in einer Ringnut (N) eine Ringdichtung (R, R') mit einem mit Vorspannkraftschluss festgelegten elastischen Dichtring (17) aufweist, wobei über die Ringdichtung (R') des einen Ventiltellers (T') eine zumindest im Wesentlichen axiale Dichtfunktion und über die Ringdichtung (R) anderen Ventiltellers (T) eine im Wesentlichen radiale Dichtfunktion im Sitz (6) generierbar sind, und zumindest der Dichtring (17) der Ringdichtung (R) für die radiale Dichtfunktion an einem formschlüssig zwischen Teilen (12, 13) in der Ringnut (N) des Ventiltellers (T, T') fixierten, formstabilen Stützring (16, 16') angebracht ist, **dadurch gekennzeichnet, dass** beide Dichtringe (17) form- und dimensionsgleich hergestellt sind, dass jeder Dichtring (17) mit einem von zwei verschiedenen Stützringen (16, 16') in der Ringnut (N) des jeweiligen Ventiltellers (T, T') positioniert ist, und dass in den Ventiltellern (T, T') die beiden Dichtringe (17) relativ zur Verstellrichtung (X) in sich im Hinblick auf die jeweilige Dichtfunktion unterscheidenden Drehlagen angeordnet sind.

2. Doppelsitzventil nach Anspruch 1, **dadurch gekennzeichnet, dass** die Dichtringe (17) in den beiden Ventiltellern (T, T') unterschiedliche Wirkdurchmesser (D1, D2) aufweisen und mit unterschiedlichen Vorspannungen in Umfangsrichtungen an den Stützringen (16, 16') angeordnet sind.

3. Doppelsitzventil nach Anspruch 1, **dadurch gekennzeichnet, dass** jeder Dichtring (17) zumindest eine aus der Ringnut (N) vortretende Außendichtzone (31) aufweist, dass der Dichtring (17) für die radiale Dichtfunktion im mehrteiligen Ventilteller (T) in einer Drehlage mit etwa radial orientierter Außendichtzone (31) angeordnet ist, und dass der Dichtring (17) für die zumindest im Wesentlichen axiale Dichtfunktion im anderen, ebenfalls mehrteiligen Ventilteller (T') in einer Drehlage angeordnet ist, in der die Außendichtzone (31) axial und radial mit einem Winkel (α) kleiner 90°, vorzugsweise etwa 30°, schräg zur Verstellrichtung (X) und zum einen Ventilteller (T) hin orientiert ist.

4. Doppelsitzventil nach wenigstens einem der vorhergehenden Ansprüche, **dadurch gekennzeichnet, dass** jeder Stützring (16, 16') einen Fußteil (19, 19') zur Fixierung zwischen Teilen (12, 13) des jeweiligen Ventiltellers (T, T') sowie einen zumindest formschlüssig innen in den Dichtring (17) einbringbaren Stützteil (14) aufweist, dass die Fußteile (19, 19') beider Stützringe (16, 16') form- und/oder dimensionsverschieden und, vorzugsweise, die Stützteile (14) mit untereinander gleichen Querschnitten ausgebildet sind, dass sich der Stützteil (14) eines Stützrings (16) senkrecht vom Fußteil (19) weg und der Stützteil (14) des anderen Stützrings (16') schräg unter einem Winkel (α) vom Fußteil (19') weg erstrecken.

5. Doppelsitzventil nach Anspruch 1, **dadurch gekennzeichnet, dass** die Ringnuten (N) in beiden Ventiltellern (T, T') zumindest im Wesentlichen identische Querschnitte aufweisen., und dass, vorzugsweise, die beiden form- und dimensionsgleich hergestellten Dichtringe (17) gleiche oder ungleiche Elastizitäten, vorzugsweise gleiche oder ungleiche ShoreHärten, aufweisen und/oder aus unterschiedlichen Elastomer- oder Gummi-Materialien bestehen.

6. Doppelsitzventil nach Anspruch 1, **dadurch gekennzeichnet, dass** jeder Dichtring (17) in Spritzgieß-Mehrkomponententechnik einstückig mit Zonen (M1, M2, M3) unterschiedlicher Shore-Härten und/oder aus unterschiedlichen Materialien hergestellt ist.

7. Doppelsitzventil nach Anspruch 1, **dadurch gekennzeichnet, dass** jeder Dichtring (17) in seinem im Wesentlichen C-förmigen Querschnitt zwei, vorzugsweise zu ihren freien Enden in der Stärke zunehmende, Außenschenkel (32), zwischen den Außenschenkeln (32) die vorzugsweise dachförmig gestaltete, Außendichtzone (31), innenseitig angrenzend an die Außenschenkel (32) je eine Ringnut (34), und zwischen den Ringnuten (34) wenigstens einen einwärts vortretenden Ringwulst (33') aufweist.

8. Doppelsitzventil nach wenigstens einem der vorhergehenden Ansprüche, **dadurch gekennzeichnet, dass** der, vorzugsweise aus Metall oder einem härteren Material als das des Dichtrings (17) ausgebildete, Stützring (16, 16') im Querschnitt den von zueinander orthogonalen Flächen (20, 21, 22) begrenzten Fußteil (19, 19') und am vom Fußteil (1,19') wegstrebenden Stützteil (14) zwei beabstandete, in die Ringnuten (34) des Dichtrings (17) passende, zumindest im Wesentlichen parallele Ringrippen (23) und zwischen den Ringrippen (23) eine als Ringnut ausgebildete Vertiefung (25) aufweist, wobei, vorzugsweise, die Ringrippen (23) über Außenschultern (24) gegenüber dem Fußteil (19, 19') einwärts versetzt sind.

9. Doppelsitzventil nach wenigstens einem der vorhergehenden Ansprüche, **dadurch gekennzeichnet, dass** bei im jeweiligen Ventilteller (T, T') montierter Ringdichtung (R, R') zwischen den am Stützring (16, 16') anliegenden Teilen (12, 13) des Ventiltellers (T, T') und dem Stützring (16, 16') und/oder in der Vertiefung (25) gegenüber dem Dichtring (17) freibleibende Ausweichräume (35, 36) vorgesehen sind.

10. Doppelsitzventil nach wenigstens einem der vorhergehenden Ansprüche, **dadurch gekennzeichnet, dass** der Stützring (16, 16') einteilig oder aus Ringsegmenten teilbar ausgebildet ist.

11. Doppelsitzventil nach Anspruch 1, **dadurch gekennzeichnet, dass** der jeweilige Dichtring (17) eine Shore-Härte von etwa 85 Shore aufweist, und, vorzugsweise, austauschbar auf dem Stützring (16, 16') angebracht ist.

12. Doppelsitzventil nach Anspruch 1, **dadurch gekennzeichnet, dass** die beiden Ventilteller (T, T') an ihren zueinander weisenden Seiten formstabile, gegenseitig in Anlagekontakt bringbare Anschlagflächen (7, 8) aufweisen, und dass an einem Ventilteller (T) an seiner zum anderen Ventilteller (T') weisenden Seite ein umlaufender, formstabiler Dichtwulst (34) vorgesehen ist, der bei Anlagekontakt der Anschlagflächen (7, 8) in einen definierten, zumindest im Wesentlichen axialen Dichteingriff mit der Außendichtzone (31) des in schräger Drehlage angeordneten Dichtrings (17) im anderen Ventilteller (T') bringbar ist.

13. Doppelsitzventil nach wenigstens einem der vorhergehenden Ansprüche, **dadurch gekennzeichnet, dass** Teile (12, 13) des jeweiligen Ventiltellers (T, T') form- und kraftschlüssig in Verstellrichtung (X) von zwei Seiten am Stützring (16, 16') abgestützt sind, und dass der Stützring (16), 16') über die Abstützung der Teile (12, 13) die einen Vorspannkraftschluss für den Dichtring (17) generierende Klemmweite der Ringnut (N) definiert.

14. Doppelsitzventil nach Anspruch 13, **dadurch gekennzeichnet, dass** der Stützring (16, 16') die einen Überstand der Außendichtzone (31) über die Ringnut (N) des Ventiltellers (T, T') generierende Radialposition des Dichtrings (17) definiert, vorzugsweise über eine radiale formschlüssige Abstützung an wenigstens einem Teil (12, 13) des Ventiltellers (T, T').

15. Doppelsitzventil nach wenigstens einem der vorhergehenden Ansprüche, **dadurch gekennzeichnet, dass** die in die Ringnuten (34) des Dichtringes (17) eingreifenden Ringrippen (23) des Stützrings (16, 16') statische Dichtbereiche des Dichtrings (17) in der Ringnut (N) funktionell von wenigstens einem dynamischen Dichtbereich des Dichtrings (17) im Sitz (6) separieren.

16. Abdichtung eines Doppelsitzventils (V), insbesondere zur Strömungssteuerung von Getränken, Lebensmitteln, pharmazeutischen oder biotechnischen Produkten, mit zwei Ventiltellern (T, T'), von denen einer (T) mittels wenigstens einer Ringdichtung (R) eine zumindest im Wesentlichen radiale Dichtfunktion und der andere mittels wenigstens einer Ringdichtung (R') eine zumindest im Wesentlichen axiale Dichtfunktion erbringt, und zumindest eine der Ringdichtungen (R, R') einen auf einem formstabilen Stützring (16, 16') angebrachten, elastischen Dichtring (17) aufweist, **dadurch gekennzeichnet, dass** die beiden Ringdichtungen (R, R') an den im Hinblick auf die Dichtfunktionen unterschiedlich ausgebildeten Stützringen (16, 16') form- und dimensionsgleich hergestellte Dichtringe (17) aufweisen.

## Claims

1. Double seat valve (V), in particular for the flow control of beverages, food products, pharmaceutical or biotechnical products, with at least one seat (6), arranged in a valve chamber (4) between flow paths (3, 5), with sealing surfaces for cooperation with two valve disks (T, T') linearly adjustable relative to each other and relative to the seat (6) in a direction of adjustment (X), each of the valve disks comprising in a ring groove (N) a ring seal (R, R') with an elastic sealing ring (17) fixed with a preload frictional connection, where via the ring seal (R') of the one valve disk (T), an at least essentially axial sealing function, and via the ring seal (R) of the other valve disk (T); an essentially radial sealing function in the seat (6) can be generated, and at least the sealing ring (17) of the ring seal (R) is attached, for the radial sealing function, at a dimensionally stable backup ring (16, 16') fixed with a positive fit between parts (12, 13) in the ring groove (N) of the valve disk (T, T'), **characterized in that** both sealing rings (17) are manufactured with the same shapes and dimensions, that each sealing ring (17) is positioned with one of two different backup rings (16, 16') in the ring groove (N) of the respective valve disk (T, T'), and that in the valve disks (T, T'), the two sealing rings (17) are arranged relative to the direction of adjustment (X) in rotational positions differing in view of the respective sealing function.

2. Double seat valve according to claim 1, **characterized in that** the sealing rings (17) in the two valve disks (T, T') have different effective diameters (D1, D2) and are arranged at the backup rings (16, 16') with different preloads in circumferential direction.

3. Double seat valve according to claim 1, **characterized in that** each sealing ring (17) comprises at least one external sealing zone (31) projecting from the ring groove (N), that the sealing ring (17) is arranged, for the radial sealing function, in the multi-piece valve disk (T) in a rotational position with an approximately radially oriented external sealing zone (31), and that the sealing ring (17) is arranged, for the at least essentially axial sealing function, in the other, also multi-piece valve disk (T') in a rotational position in which the external sealing zone (31) is oriented axially and radially at an angle (α) smaller than 90°, preferably approximately 30°, obliquely to the direction of adjustment (X) and towards the one valve disk (T).

4. Double seat valve according to at least one of the preceding claims, **characterized in that** each backup ring (16, 16') comprises a foot part (19, 19') to be fixed between parts (12, 13) of the respective valve disk (T, T') as well as a backup part (14) which can be introduced into the sealing ring (17) at least with a positive fit, that the foot parts (19, 19') of both backup rings (16, 16') have different shapes and/or dimensions, and preferably the backup parts (14) are embodied with identical cross-sections, that the backup part (14) of one backup ring (16) extends perpendicularly away from the foot part (19), and the backup part (14) of the other backup ring (16') extends obliquely away from the foot part (19') at an angle (α).

5. Double seat valve according to claim 1, **characterized in that** the ring grooves (N) in both valve disks (T, T') have at least essentially identical cross-sections, and that, preferably, the two sealing rings (17) manufactured with the same shapes and dimensions exhibit the same or different elasticities, preferably the same or different Shore hardnesses, and/or consist of different elastomer or rubber materials.

6. Double seat valve according to claim 1, **characterized in that** each sealing ring (17) is integrally manufactured by multi-injection molding technology with zones (M1, M2, M3) of different Shore hardnesses and/or different materials.

7. Double seat valve according to claim 1, **characterized in that** each sealing ring (17) comprises, in its essentially C-shaped cross-section, two outer legs (32) which preferably become thicker towards their free ends, between the outer legs (32), the external sealing zone (31) preferably designed like a roof, internally adjacent to the outer legs (32) one ring groove (34) each, and between the ring grooves (34) at least one annular bead (33') projecting inwards.

8. Double seat valve according to at least one of the preceding claims, **characterized in that** the backup ring (16, 16') preferably manufactured of metal or a harder material than that of the sealing ring (17) comprises in its cross-section the foot part (19, 19') limited by orthogonal surfaces (20, 21, 22), and at the backup part (14) leading away from the foot part (19, 19'), two spaced apart ring ribs (23) fitting into the ring grooves (34) of the sealing ring (17) and being at least essentially parallel, and between the ring ribs (23) an indentation (25) embodied as a ring groove, wherein, preferably, the ring ribs (23) are offset to the inside with respect to the foot part (19, 19') via external shoulders (24).

9. Double seat valve according to at least one of the preceding claims, **characterized in that**, with the ring seal (R, R') being mounted in the respective valve disk (T, T'), open spreading spaces (35, 36) are provided between the parts (12, 13) of the valve disk (T, T') lying against the backup ring (16, 16') and the backup ring (16, 16'), and/or in the indentation (25) opposite the backup ring (17).

10. Double seat valve according to at least one of the preceding claims, **characterized in that** the backup ring (16, 16') is embodied in one piece or of divisible ring segments.

11. Double seat valve according to claim 1, **characterized in that** the respective sealing ring (17) has a Shore hardness of about 85 Shore, and is attached on the backup ring (16, 16') so as to be replaceable.

12. Double seat valve according to claim 1, **characterized in that** the two valve disks (T, T') comprise at their sides facing each other dimensionally stable stop faces (7, 8) that can be brought into mutual abutting contact, and that at one valve disk (T) at its side facing to the other valve disk (T'), a surrounding, dimensionally stable sealing bead (34) is provided which in case of an abutting contact of the stop faces (7, 8) can be brought into a defined, at least essentially axial sealing engagement with the external sealing zone (31) of the sealing ring (17) arranged in an oblique rotational position in the other valve disk (T').

13. Double seat valve according to at least one of the preceding claims, **characterized in that** parts (12, 13) of the respective valve disk (T, T') are positively and non-positively supported at the backup ring (16, 16') from two sides in the direction of adjustment (X), and that the backup ring (16, 16') defines, by the support of the parts (12, 13), the clamping width of the ring groove (N) generating a preloaded force-fit for the sealing ring (17).

14. Double seat valve disk according to claim 13, **characterized in that** the backup ring (16, 16') defines the radial position of the sealing ring (17) generating a protrusion of the external sealing zone (31) over the ring groove (N) of the valve disk (T, T'), preferably over a radial positive form-fit support at at least one part (12, 13) of the valve disk (T, T').

15. Double seat valve according to at least one of the preceding claims, **characterized in that** the ring ribs (23) of the backup ring (16, 16') engaging in the ring grooves (34) of the sealing ring (17) functionally separate static sealing regions of the sealing ring (17) in the ring groove (N) from at least one dynamic sealing region of the sealing ring (17) in the seat (6).

16. Seal of a double seat valve (V), in particular for the flow control of beverages, food products, pharmaceutical or biotechnical products, with two valve disks (T, T'), one of which (T) providing, by means of at least one ring seal (R), an at least essentially radial sealing function, and the other one, by means of at least one ring seal (R'), an at least essentially axial sealing function, and where at least one of the ring seals (R, R') comprises an elastic sealing ring (17) attached on a dimensionally stable backup ring (16, 16'), **characterized in that** the two ring seals (R, R') at the backup rings (16, 16') comprise sealing rings (17) manufactured with the same shapes and dimensions and that the backup rings (16, 16') are designed differently in view of the respective sealing functions.

## Revendications

1. Soupape à siège double (V), notamment pour commander l'écoulement de boissons, de denrées alimentaires, de produits pharmaceutiques ou biotechniques, comprenant au moins un siège (6) agencé dans un corps de soupape (4) entre des parcours d'écoulement (3, 5) et comportant des surfaces d'étanchéité pour l'interaction avec deux têtes d'obturation de soupape (T, T'), qui peuvent être déplacées linéairement l'une par rapport à l'autre et par rapport au siège (6) dans une direction de déplacement (X), et dont chacune présente dans une rainure annulaire (N), un joint d'étanchéité annulaire (R, R') avec un anneau d'étanchéité élastique (17) fixé par une liaison par adhérence sous précontrainte, soupape dans laquelle il est possible de générer dans le siège (6), par l'intermédiaire du joint d'étanchéité annulaire (R') de la tête d'obturation de soupape (T'), une fonction d'étanchéité sensiblement axiale, et, par l'intermédiaire du joint d'étanchéité annulaire (R) de l'autre tête d'obturation de soupape (T), une fonction d'étanchéité sensiblement radiale, et au moins l'anneau d'étanchéité (17) du joint d'étanchéité annulaire (R) pour la fonction d'étanchéité radiale, est placé sur un anneau d'appui (16, 16') de forme stable et fixé par complémentarité de formes entre des parties (12, 13) dans la rainure annulaire (N) de la tête d'obturation de soupape (T, T'),
**caractérisée en ce que** les deux anneaux d'étanchéité (17) sont fabriqués avec une forme et des dimensions identiques, **en ce que** chaque anneau d'étanchéité (17) est positionné avec l'un de deux anneaux d'appui (16, 16') différents dans la rainure annulaire (N) de la tête d'obturation de soupape respective (T, T'), et **en ce que** dans les têtes d'obturation de soupape (T, T'), les deux anneaux d'étanchéité (17) sont agencés selon des positions de rotation différentes par rapport à la direction de déplacement (X) dans l'optique de leur fonction d'étanchéité respective.

2. Soupape à siège double selon la revendication 1,
**caractérisée en ce que** les anneaux d'étanchéité (17) présentent, dans les deux têtes d'obturation de soupape (T, T'), des diamètres actifs (D1, D2) différents, et sont agencés sur les anneaux d'appui (16, 16') avec des précontraintes différentes dans des directions périphériques.

3. Soupape à siège double selon la revendication 1,
**caractérisée en ce que** chaque anneau d'étanchéité (17) présente au moins une zone d'étanchéité extérieure (31) avançant hors de la rainure annulaire (N), **en ce que** l'anneau d'étanchéité (17) pour la fonction d'étanchéité radiale est agencé dans une tête d'obturation de soupape (T) en plusieurs parties, dans une position de rotation avec une zone d'étanchéité extérieure (31) orientée sensiblement de manière radiale, et **en ce que** l'anneau d'étanchéité (17) pour la fonction d'étanchéité au moins sensiblement axiale est agencé dans l'autre tête d'obturation de soupape (T') également en plusieurs parties, dans une position de rotation dans laquelle la zone d'étanchéité extérieure (31) est orientée axialement et radialement de manière inclinée d'un angle (α) inférieur à 90°, de préférence d'environ 30°, par rapport à la direction de déplacement (X) et vers ladite une tête d'obturation de soupape (T).

4. Soupape à siège double selon l'une au moins des revendications précédentes, **caractérisée en ce que** chaque anneau d'appui (16, 16') comporte une partie de base (19, 19') pour la fixation entre des parties (12, 13) de la tête d'obturation de soupape (T, T') respective, ainsi qu'une partie d'appui (14) pouvant être insérée au moins par complémentarité de formes à l'intérieur de l'anneau d'étanchéité (17), **en ce que** les parties de base (19, 19') des deux anneaux d'appui (16, 16') sont de configuration de forme et/ou de dimensions différentes, et les parties d'appui (14) sont de préférence réalisées avec des sections transversales identiques entre-elles, et **en ce que** la partie d'appui (14) d'un anneau d'appui (16) s'étend de manière à s'éloigner perpendiculairement de la partie de base (19), et la partie d'appui (14) de l'autre anneau d'appui (16') s'étend de manière à s'éloigner de la partie de base (19') de façon oblique sous un angle (α).

5. Soupape à siège double selon la revendication 1,
**caractérisée en ce que** les rainures annulaires (N) dans les deux têtes d'obturation de soupape (T, T'), présentent des sections transversales au moins sensiblement identiques, et **en ce que**, de préférence, les deux anneaux d'étanchéité (17) fabriqués avec une forme et des dimensions identiques, présentent des élasticités égales ou différentes, de préférence des duretés Shore égales ou différentes, et/ou sont réalisés en des matériaux d'élastomère ou de caoutchouc différents.

6. Soupape à siège double selon la revendication 1,
**caractérisée en ce que** chaque anneau d'étanchéité (17) est fabriqué d'un seul tenant par une technique de moulage par injection multi-composants, avec des zones (M1, M2, M3) de duretés Shore différentes et/ou en des matériaux différents.

7. Soupape à siège double selon la revendication 1,
**caractérisée en ce que** chaque anneau d'étanchéité (17) présente dans sa section transversale sensiblement en forme de C, deux branches extérieures (32), qui sont de préférence d'une épaisseur croissante en direction de leur extrémité libre, entre les branches extérieures (32) la zone d'étanchéité extérieure (31) de préférence configurée en forme de toit, du côté intérieur et de manière adjacente aux branches extérieures (32), respectivement une rainure annulaire (34), et entre les rainures annulaires (34) au moins un bourrelet annulaire (33') s'avançant vers l'intérieur.

8. Soupape à siège double selon l'une au moins des revendications précédentes, **caractérisée en ce que** l'anneau d'appui (16, 16') réalisé de préférence en métal ou en un matériau plus dur que celui de l'anneau d'étanchéité (17), présente, en section transversale, la partie de base (19, 19') délimitée par des surfaces orthogonales (20,21, 22), et sur la partie d'appui (14) s'avançant de la partie de base (19, 19') deux nervures (23) au moins sensiblement parallèles, mutuellement espacées, et adaptées à s'ajuster dans les rainures annulaires (34) de l'anneau d'étanchéité (17), et entre les nervures annulaires (23) un creux (25) réalisé sous forme de rainure annulaire, les nervures annulaires (23) étant de préférence déportées vers l'intérieur par rapport à la partie de base (19, 19'), par l'intermédiaire d'épaulements extérieurs (24).

9. Soupape à siège double selon l'une au moins des revendications précédentes, **caractérisée en ce que** pour un joint d'étanchéité annulaire (R, R') monté dans la tête d'obturation de soupape (T, T') respective, il est prévu entre les parties (12, 13) de la tête d'obturation de soupape (T, T'), qui s'appuient contre l'anneau d'appui (16, 16'), et l'anneau d'appui (16, 16') et/ou dans le creux (25), des espaces d'échappatoire (35, 36) restant libres par rapport à l'anneau d'étanchéité (17).

10. Soupape à siège double selon l'une au moins des revendications précédentes, **caractérisée en ce que** l'anneau d'appui (16, 16') est réalisé d'un seul tenant, ou est divisé en segments d'anneau.

11. Soupape à siège double selon la revendication 1, **caractérisée en ce que** l'anneau d'étanchéité (17) respectif présente une dureté Shore d'environ 85 Shore, et est de préférence rapporté de manière interchangeable sur l'anneau d'appui (16, 16').

12. Soupape à siège double selon la revendication 1, **caractérisée en ce que** les deux têtes d'obturation de soupape (T, T') présentent sur leurs côtés dirigés l'un vers l'autre, des surfaces de butée (7, 8) de forme stable ou rigide, qui peuvent être amenées en contact d'appui réciproque, et **en ce que** sur une tête d'obturation de soupape (T) il est prévu, sur son côté dirigé vers l'autre tête d'obturation de soupape (T'), un bourrelet d'étanchéité (34) périphérique, de forme stable ou rigide, qui, lors du contact d'appui des surfaces de butée (7, 8), peut être amené en prise d'étanchéité définie, au moins sensiblement axiale, avec la zone d'étanchéité extérieure (31) de l'anneau d'étanchéité (17) agencé dans la position de rotation oblique dans l'autre tête d'obturation de soupape (T').

13. Soupape à siège double selon l'une au moins des revendications précédentes, **caractérisée en ce que** des parties (12, 13) de la tête d'obturation de soupape (T, T') respective s'appuient par complémentarité de formes et par adhérence de deux côtés dans la direction de déplacement (X), contre l'anneau d'appui (16, 16'), et **en ce que** l'anneau d'appui (16, 16') définit, par l'intermédiaire de l'appui mutuel des parties (12, 13), la largeur de serrage de la rainure annulaire (N) produisant une liaison par adhérence de précontrainte pour l'anneau d'étanchéité (17).

14. Soupape à siège double selon la revendication 13, **caractérisée en ce que** l'anneau d'appui (16, 16') définit la position radiale de l'anneau d'étanchéité (17), qui produit un dépassement de la zone d'étanchéité extérieure (31) au-delà de la rainure annulaire (N) de la tête d'obturation de soupape (T, T'), de préférence par l'intermédiaire d'un appui radial par complémentarité de formes ou butée mécanique positive contre au moins une partie (12, 13) de la tête d'obturation de soupape (T, T').

15. Soupape à siège double selon l'une au moins des revendications précédentes, **caractérisée en ce que** les nervures annulaires (23) de l'anneau d'appui (16, 16'), qui s'engagent dans les rainures annulaires (34) de l'anneau d'étanchéité (17), séparent fonctionnellement des zones d'étanchéité statique de l'anneau d'étanchéité (17) dans la rainure annulaire (N), d'au moins une zone d'étanchéité dynamique de l'anneau d'étanchéité (17) dans le siège (6).

16. Etanchéité d'une soupape à siège double (V), notamment pour commander l'écoulement de boissons, de denrées alimentaires, de produits pharmaceutiques ou biotechniques, comprenant deux têtes d'obturation de soupape (T, T'), dont l'une (T) produit, au moyen d'au moins un joint d'étanchéité annulaire (R), une fonction d'étanchéité au moins sensiblement radiale, et l'autre, au moyen d'au moins un joint d'étanchéité annulaire (R'), une fonction d'étanchéité au moins sensiblement axiale, et au moins l'un des joints d'étanchéité annulaires (R, R') présente un anneau d'étanchéité (17) élastique, placé sur un anneau d'appui (16, 16') de forme stable ou rigide, **caractérisée en ce que** les deux joints d'étanchéité annulaires (R, R') comportent des anneaux d'étanchéité (17) fabriqués avec une forme et des dimensions identiques, sur les anneaux d'appui (16, 16') de configuration différente dans l'optique des fonctions d'étanchéité à réaliser.
